# EUROPÄISCHE PATENTANMELDUNG

(11) **EP 3 293 477 A1**
(43) Veröffentlichungstag der Anmeldung: **14.03.2018**
(21) Anmeldenummer: 16188293.1
(22) Anmeldetag: 12.09.2016
(51) Int. Cl.: F28F 7/00, F28F 13/00, F16B 25/00, F16B 35/04, F16B 39/10

(54) **KÜHLVORRICHTUNG ZUM KÜHLEN EINER VERBINDUNG ZWISCHEN ZWEI BAUTEILEN**

(71) Anmelder: Siemens Aktiengesellschaft, 80333 München (DE)
(72) Erfinder: Atakan, Burak, 47906 Kempen (DE); Roskosch, Dennis, 47443 Moers (DE); Thiemann, Thomas, 45659 Recklinghausen (DE)

(57) **Zusammenfassung**

Die Erfindung betrifft eine Kühlvorrichtung (1) zum Kühlen einer Verbindung zwischen zwei Bauteilen (2,3), mit einer Mehrzahl von Verbindungselementen (4) und einer Kühlbaugruppe (5), wobei die Kühlbaugruppe (5) eine der Mehrzahl der Verbindungselemente (4) entsprechende Anzahl von Einsetzteilen (6) und ein Kühlelement (7) aufweist, wobei das Kühlelement (7) mit den Einsetzteilen (6) wärmeleitend verbunden ist, und wobei die Kühlbaugruppe (5) wärmeleitend mit den Verbindungselementen (4) verbunden ist.

## Beschreibung

Die Erfindung betrifft eine Kühlvorrichtung zum Kühlen einer Verbindung zwischen zwei Bauteilen.

Verbindungen zwischen zwei Bauteilen, wie z.B. Flanschverschraubungen im Kraftwerks- und Anlagenbau, sind prozessbedingt zunehmend hohen Temperatur- und Druckbeanspruchungen unterworfen.

Eine Verbindung zwischen zwei Bauteilen kann unter Verwendung eines oder mehrerer Verbindungselemente gebildet werden. Das Verbindungselement kann ein Stift, ein Bolzen, oder eine Schraube sein, die außen mit einem Gewinde versehen ist. Eine mit dem Verbindungselement hergestellte Verbindung ist in der Regel kraft- und/oder formschlüssig und wieder lösbar, kann aber auch unlösbar sein.

Manche Anwendungen sind derart hoch beansprucht, dass sehr kostenintensive Werkstoffe eingesetzt werden müssen, z.B. Nickelbasislegierungen. Unter Umständen ist eine geschraubte Verbindung auch gar nicht mehr realisierbar, so dass beispielsweise angegossene oder geschweißte Lösungen zur Anwendung kommen müssen.

Durch Verwendung von hochlegierten Werkstoffen, z.B. auf Nickelbasis, als Verbindungselementmaterial können diese Anforderungen sicher beherrscht werden. Allerdings fallen hier hohe Materialkosten für das Verbindungselementmaterial an, die deutlich höher als z.B. bei Stahlschrauben sind.

Aus der EP 1 979 632 B1 ist eine Schraube mit einem unteren und einem oberen Ende zum Verbinden eines ersten Bauteils mit einem zweiten Bauteil bekannt. In der Schraube ist ein Hohlraum gebildet, der sich in Längsrichtung der Schraube erstreckt. In diesem Hohlraum wird ein Medium eingefüllt und so der Hohlraum als Wärmerohr ausgebildet, wodurch eine gute Kühlung für die Schraube erreicht wird. Jedoch weist eine derartige Schraube einen komplizierten Aufbau auf und ist aufwändig herzustellen.

Es besteht daher Bedarf daran, zumindest einen Weg aufzuzeigen, wie die Kühlung einer Verbindung zwischen Bauteilen mit einfachen Mitteln verbessert werden kann, so dass auf die Verwendung von hochlegierten Werkstoffen verzichtet werden kann.

Erfindungsgemäß ist eine Kühlvorrichtung zum Kühlen einer Verbindung zwischen zwei Bauteilen mit einer Mehrzahl von Verbindungselementen und einer Kühlbaugruppe vorgesehen, wobei die Kühlbaugruppe eine der Mehrzahl der Verbindungselemente entsprechende Anzahl von Einsetzteilen und ein Kühlelement aufweist, wobei das Kühlelement mit den Einsetzteilen wärmeleitend verbunden ist, und wobei die Kühlbaugruppe wärmeleitend mit den Verbindungselementen verbunden ist. Mit anderen Worten, ein einzelnes Kühlelement ist einer Mehrzahl von Verbindungselementen zugeordnet, wobei zuerst die Verbindung zwischen zwei Bauteilen durch Einsetzen der Einsetzteile in entsprechende Bohrungen der zu verbindenden Bauteile hergestellt wird und anschließend wird das Kühlelement montiert. Somit wendet sich die Erfindung davon ab, komplett fertig montierte Verbindungselemente, wie z.B. Schrauben mit einem Wärmerohr, zu verwenden, sondern schlägt stattdessen vor, die Verbindungselemente nach ihrer Montage zu komplettieren. So kann mit einfachen Mitteln die Kühlung verbessert werden. Alternativ kann die Kühlbaugruppe auch bereits vor der Montierung der Verbindungselemente eingebaut werden.

Bevorzugt weist die Kühlvorrichtung mehrere Bauteile auf und die Bauteile sind aus unterschiedlichen Materialen gefertigt. So können besonders einfach unterschiedliche Materialien mit unterschiedlichen Eigenschaften kombiniert werden.

Bevorzugt ist ein Verbindungselement mit einem Grundkörper als Bauteil aus einem ersten Material mit einer ersten Wärmeleitfähigkeit vorgesehen, wobei der Grundkörper einen Hohlraum aufweist, wobei in dem Hohlraum ein Einsetzteil als Bauteil aus einem zweiten, festen Material eingesetzt ist, das eine zweite Wärmeleitfähigkeit aufweist, die höher als die erste Wärmeleitfähigkeit des ersten Materials ist. Somit dient das Einsetzteil als Wärmeleiter und führt Wärme von z.B. einem Ende des Verbindungselements zu einem anderen Ende des Verbindungselements ab, so dass eine Kühlung des Verbindungselements und damit der Verbindung erreicht wird. Dies erlaubt es, insbesondere für den Grundkörper, auf kostspielige Chromstähle oder Nickellegierungen zu verzichten.

Bevorzugt ist vorgesehen, dass der Hohlraum eine Hohlraum-Haupterstreckungsrichtung und das Einsetzteil eine Einsetzteil-Haupterstreckungsrichtung aufweist, wobei die Hohlraum-Haupterstreckungsrichtung und die Einsetzteil-Haupterstreckungsrichtung gleich ausgerichtet sind. Dabei wird unter einer Haupterstreckungsrichtung eine Richtung verstanden, entlang der ein Bauteil eine Abmessung bzw. Länge aufweist, die größer als die Abmessungen in anderen Richtungen des Bauteils, wie z.B. deren Breite, ist. Somit erstreckt sich der Hohlraum im Wesentlichen von einer Spitze am unteren Ende des Verbindungselements bis zu deren Kopf bzw. oberen Ende, sodass Wärme praktisch durch die ganze Länge des Verbindungselements abgeleitet werden kann. Alternativ ist auch eine nur teilweise Nutzung der gesamten Länge möglich.

Bevorzugt ist vorgesehen, dass das zweite Material Kupfer oder eine Kupfer enthaltende Legierung ist. Bei den Kupfer enthaltenden Legierungen kann es sich z.B. um Messing, Bronze, Tombak oder andere Legierungen, insbesondere deren Knetlegierungen, handeln. Kupfer bzw. Kupfer enthaltende Legierungen weisen eine besonders gute Wärmeleitfähigkeit auf und sind einfach zu verarbeiten. Alternativ kann auch Aluminium oder Aluminium enthaltende Legierungen, insbesondere deren Knetlegierungen, verwendet werden. Unter Knetlegierungen werden dabei Legierungen verstanden, die sich durch eine ihre Duktilität begünstigende Zusammensetzung für Aufgaben beim Walzen, Pressen, Ziehen, Schmieden von den Gusslegierungen auf Aluminium-, Magnesium- oder Kupferbasis unterscheiden.

Bevorzugt ist vorgesehen, dass das erste Material Eisen oder eine Eisen enthaltende Legierung ist. Z.B. kann das erste Material Stahl sein. Somit kann ein preiswertes und zugleich mechanisch stabiles Material verwendet werden.

Bevorzugt ist vorgesehen, dass das Einsetzteil mit dem Grundkörper durch einen Formschluss verbunden ist. Unter einem Formschluss wird dabei eine Verbindung verstanden, die durch das Ineinandergreifen von mindestens zwei Verbindungspartnern entsteht. Weisen die beiden Verbindungspartner zwei zueinander koaxiale Zylinderflächen auf, so besteht der Formschluss in allen Richtungen der zur Zylinderachse senkrechten Ebene. Der Formschluss kann lösbar oder unlösbar sein. Eine weitere Möglichkeit ist eine rein kraftschlüssige Verbindung, bei der beispielsweise am Umfang verteilte Schrauben die erforderliche Vorspannkraft erbringen. Diese Schrauben werden dann jeweils mit dem beschriebenen Kühlelement gekühlt.

Bevorzugt ist vorgesehen, dass zwischen dem Einsetzteil und mit dem Grundkörper eine Wärmeleitpaste angeordnet ist. Dabei wird unter einer Wärmeleitpaste eine Paste verstanden, die die Wärmeübertragung zwischen dem Einsatzbauteil und dem Grundkörper verbessert. Mit der Wärmeleitpaste können fertigungsbedingte Spalte überwunden werden, die für eine Montage nötig sind, insbesondere wenn das Einsetzteil mit dem Grundkörper nicht durch einen Formschluss, sondern stoffschlüssig verbunden ist. Alternativ kann das Einsetzteil in den Grundkörper mechanisch eingepresst werden, so dass durch plastische Verformung ein dichtes Anliegen der Oberflächen und damit ein guter Wärmeübergang gewährleistet ist.

Bevorzugt ist vorgesehen, dass das jeweilige Einsetzteil in den jeweiligen Grundkörper eingepresst ist. Auch so wird ein dichtes Anliegen der Oberflächen und damit ein guter Wärmeübergang gewährleistet.

Bevorzugt ist vorgesehen, dass das Einsetzteil wärmeleitend mit einem durch Konvektion kühlenden Kühlelement verbunden ist. Bei natürlicher oder auch freier Konvektion strömt ein Kühlmedium, wie z.B. Luft, aufgrund von temperaturbedingten Dichteunterschieden. Dabei kann das Kühlmedium in einem offenen oder auch ganz oder teilweise geschlossenen Kreislauf, der Schwerkraftzirkulation zirkulieren. Eine dauerhafte Zirkulation tritt immer dann auf, wenn eine Wärmequelle geodätisch höher liegt als eine Wärmesenke (Kühlung), weil das erwärmte Kühlmedium eine geringere Dichte besitzt und deshalb im Gravitationsfeld einen statischen Auftrieb erfährt. Da die Transportgeschwindigkeit im Regelfall recht gering ist und für das wärmere Kühlmittel stets in Richtung von "heiß" nach "kalt" erfolgt, kann sie bei erzwungener Konvektion z.B. durch Ventilatoren verstärkt werden. So kann die Kühlung des Verbindungselements nochmals verbessert werden.

Bevorzugt ist vorgesehen, dass das Einsetzteil und das Kühlelement einstückig und/oder materialeinheitlich ausgebildet sind. Durch eine einstückige Ausbildung werden Spalte und Verbindungsnähte zwischen dem Einsetzteil und dem Kühlelement vermieden, die sonst die Wärmeleitung behindern würden. Durch eine materialeinheitliche Ausbildung wird ein Wärmeübergangswiderstand an der Verbindungsstelle zwischen dem Einsetzteil und dem Kühlelement vermieden.

Bevorzugt ist vorgesehen, dass das Kühlelement eine im Wesentlichen ringförmige Grundform aufweist. So kann das Kühlelement eine Mehrzahl von Verbindungselementen wärmeleitend verbinden, die in Bohrungen eingesetzt sind, die ringförmig und gleichmäßig beabstandet an einem Flansch angeordnet sind, der zum Verbinden der beiden Bauteile vorgesehen ist.

Bevorzugt ist vorgesehen, dass das Kühlelement eine im Wesentlichen zylindermantelflächenförmige Kühlfläche aufweist. So kann ein Kühlelement mit einer Kühlfläche bereitgestellt werden, deren Größe bei minimalem Bauraumbedarf maximiert ist.

Ferner gehört zur Erfindung eine Kühlbaugruppe und ein Verbindungselement für eine derartige Kühlvorrichtung.

Im Folgenden wird eine bevorzugte Ausführungsform des erfindungsgemäßen Verbindungselements anhand der beigefügten schematischen Zeichnungen erläutert. Es zeigt:
- Fig. 1: eine schematische Darstellung eines Ausführungsbeispiels einer Kühlvorrichtung zum Kühlen einer Verbindung zwischen zwei Bauteilen, und
- Fig. 2: eine schematische Schnittdarstellung der in Fig. 1 dargestellten Kühlvorrichtung.
Es wird auf die Figur 1 Bezug genommen.

Dargestellt ist eine Kühlvorrichtung 1 zum Kühlen einer Verbindung zwischen zwei Bauteilen 2, 3. Die beiden Bauteile 2, 3 bilden im vorliegenden Ausführungsbeispiel eine Flanschverschraubung, z.B. im Kraftwerks- oder Anlagenbau.

Die Kühlvorrichtung 1 weist eine Mehrzahl von Verbindungselementen 4 (von denen aus Gründen der Übersichtlichkeit nur ein Verbindungselement mit dem Bezugszeichen 4 gekennzeichnet ist) und eine Kühlbaugruppe 5 auf. Dabei weist die Kühlbaugruppe 5 eine der Mehrzahl der Verbindungselemente 1 entsprechende Anzahl von Einsetzteilen 6 und ein Kühlelement 7 auf.

Die Verbindungselemente 4 sind im vorliegenden Ausführungsbeispiel als Schrauben ausgebildet. Alternativ können die Verbindungselemente 4 auch als Bolzen oder Stifte ausgebildet sein. Mit den Verbindungselementen 1 kann im vorliegenden Ausführungsbeispiel eine lösbare Verbindung gebildet werden. Alternativ können die Verbindungselemente 4 dazu ausgebildet sein, eine unlösbare Verbindung zu bilden.

Das Kühlelement 7 ist mit den Einsetzteilen 4 wärmeleitend und die Kühlbaugruppe 5 ist wärmeleitend mit den Verbindungselementen verbunden, wie dies später noch detailliert erläutert wird.

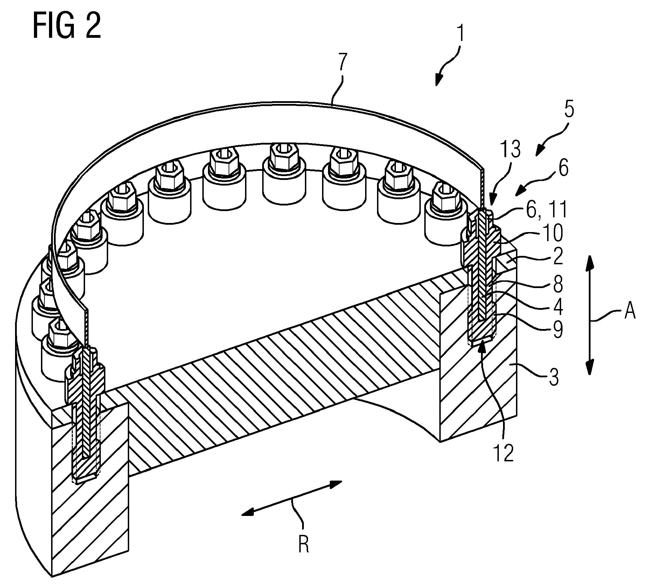

Es wird nun zusätzlich auf die Figur 2 Bezug genommen.

Die Verbindungselemente 4 weisen im vorliegenden Ausführungsbeispiel je einen Grundkörper 8 auf, der aus einem ersten Material mit einer ersten Wärmeleitfähigkeit gefertigt ist. Im vorliegenden Ausführungsbeispiel ist das erste Material Eisen oder eine Eisen enthaltende Legierung, wie z.B. eine Stahllegierung gemäß DIN EN 10020:2000-07. Gemäß dieser Norm wird unter Stahl ein Werkstoff verstanden, dessen Massenanteil an Eisen größer ist als der jedes anderen Elementes, dessen Kohlenstoffgehalt im Allgemeinen kleiner als 2,06 % ist und der andere Elemente enthält. Ferner wird unter Stahl auch ein Chromstahl verstanden, der mehr als 2,06 % Kohlenstoff enthält.

Die Grundkörper 8 weisen jeweils eine im Wesentlichen zylinderförmige Grundform auf und wurden abschnittweise je mit einem Außengewinde 9 versehen. Die im vorliegenden Ausführungsbeispiel im Wesentlichen zylinderförmigen Verbindungselemente 4 sind dazu ausgebildet, in ein Gegengewinde einer Mutter oder einem anderen an der Verbindung Bauteil 2, 3 eingeschraubt zu werden. Mit anderen Worten, die Verbindungselemente 4 sind im vorliegenden Ausführungsbeispiel als Metallschrauben mit einem nicht-selbstschneidenden Außengewinde 9 zum Bilden einer lösbaren Verbindung ausgebildet.

Im vorliegenden Ausführungsbeispiel weisen die Verbindungselemente 4 jeweils einen Kopf 10 auf. Abweichend vom vorliegenden Ausführungsbeispiel können die Verbindungselemente 4 auch kopflos ausgebildet sein.

Die Grundkörper 8 weisen jeweils einen Hohlraum 11 auf.

Die Hohlräume 11 weisen im vorliegenden Ausführungsbeispiel jeweils eine im Wesentlichen zylinderförmige Grundform auf und sind jeweils als Sackloch ausgebildet. Alternativ können die Hohlräume 11 auch als Durchgangsbohrungen ausgebildet sein. Dabei ist im vorliegenden Ausführungsbeispiel die Länge des Hohlraums 11 in axialer Richtung A deutlich größer als seine Ausdehnung in radialer Richtung R. Mit anderen Worten, die axiale Richtung A ist die Hohlraum-Haupterstreckungsrichtung des Hohlraumes 11.

In jedem Hohlraum 11 ist ein je Einsetzteil 6 eingesetzt. Die Einsetzteile 6 sind jeweils ein Festkörper. Mit anderen Worten, das Einsetzteil 6 ist aus einem zweiten, festen Material gefertigt. Somit befindet sich das zweite Material im festen Aggregatszustand.

Das zweite Material weist eine zweite Wärmeleitfähigkeit auf. Im vorliegenden Ausführungsbeispiel ist das zweite Material Kupfer oder eine Kupfer enthaltende Legierung. Somit bildet das Einsetzteil 6 jeweils einen Wärmeleiter zum Abführen von Wärme, da es bessere Wärmeleiteigenschaften als das erste Material des jeweiligen Grundkörpers 8 aufweist.

Ferner weisen die Einsetzteile 6 jeweils abschnittweise eine zu dem Hohlraum korrespondierende Form auf. Daher weisen die Einsetzteile 6 jeweils ebenfalls eine im Wesentlichen zylinderförmige Grundform auf, wobei die Länge der Einsetzteile 6 in axialer Richtung A deutlich größer als seine Ausdehnung in radialer Richtung R ist. Mit anderen Worten, die axiale Richtung A ist die Einsetzteil-Haupterstreckungsrichtung des Einsetzteils 6.

Im vorliegenden Ausführungsbeispiel sind die Hohlraum-Haupterstreckungsrichtung und die Einsetzteil-Haupterstreckungsrichtung gleich ausgerichtet. Somit erstrecken sich der Hohlraum 11 und das Einsetzteil 6 jeweils fast über die ganze Länge des jeweiligen Verbindungselements 4 in axialer Richtung A, so dass - wie später noch beschreiben wird - Wärme von einem ersten, unteren Ende 12 des Verbindungselements 2 zu einem zweiten, oberen Ende 13 des Verbindungselements 2 geleitet werden kann.

Im vorliegenden Ausführungsbeispiel sind die Einsetzteile 6 in den jeweiligen Hohlräume 11 durch einen Formschluss gehalten. So ist ein inniger Kontakt zwischen dem jeweiligen Grundkörper 8 und dem jeweiligen Einsetzteil 6 gegeben, der eine wärmeleitende Verbindung zwischen dem Grundkörper 8 und dazugehörenden Einsetzteil 6 gewährleistet. Alternativ kann das Einsetzteil 6 in dem jeweiligen Hohlraum 11 z.B. stoffschlüssig gehalten sein. Hierbei kann eine Wärmeleitpaste zwischen dem Einsetzteil 6 und mit dem Grundkörper 8 angeordnet sein, um fertigungsbedingte Spalte zwischen dem Hohlraum 11 und dem Einsetzteil 6 zu überbrücken, um eine wärmeleitende Verbindung zwischen dem Grundkörper 8 und dem Einsetzteil 6 zu gewährleisten.

An dem oberen Ende 13 der jeweiligen Verbindungselemente 4 ist im vorliegenden Ausführungsbeispiel das Kühlelement 7 angeordnet. Das Kühlelement 7 ist zum Kühlen durch Konvektion ausgebildet und steht wärmeleitend in Verbindung mit jedem der Einsetzteile 6. Hierzu sind im vorliegenden Ausführungsbeispiel die Einsetzteile 4 und das Kühlelement 7 einstückig und materialeinheitlich ausgebildet. Somit ist das Kühlelement 7 wie die Einsetzteile 6 aus Kupfer oder einer Kupfer enthaltenden Legierung gefertigt.

Das Kühlelement 5 weist im vorliegenden Ausführungsbeispiel eine ringförmig ausgebildete Kühlfläche 14 auf, die im vorliegenden Ausführungsbeispiel die Form einer Zylindermantelfläche aufweist.

Im Betrieb erwärmt sich das untere Ende 12 des jeweiligen Verbindungselements 4, z.B. weil es in einer Bohrung mit Innengewinde eines sich stark erwärmenden Bauteils 3, wie z.B. eines Flansches, eingeschraubt ist.

Wärme wird dann von dem jeweiligen Grundkörper 8 des Verbindungselements 4 zu dem in dem jeweiligen Hohlraum 11 eingesetzten Einsetzteil 6 geleitet. Aufgrund der besseren Wärmeleiteigenschaften des jeweiligen Einsetzteils 6 leiten die Einsetzteile 6 Wärme von dem unteren Ende 12 des jeweiligen Verbindungselements 4 zum jeweiligen oberen Ende 13 des jeweiligen Verbindungselements 4 und damit zu dem Kühlelement 7. Das Kühlelement 7 bewirkt eine Abgabe von Wärme an die Umgebung durch natürliche und/oder erzwungene Konvektion. So kann eine Reduzierung der Temperatur der Verbindungselemente 4 um z.B. 10°C bis 20°C erreicht werden, was es erlaubt, auf hochlegierte Werkstoffe, wie z.B. nickelhaltige Werkstoffe zu verzichten, und stattdessen Eisen oder eisenhaltige Legierungen, wie z.B. Stahl, zu verwenden.

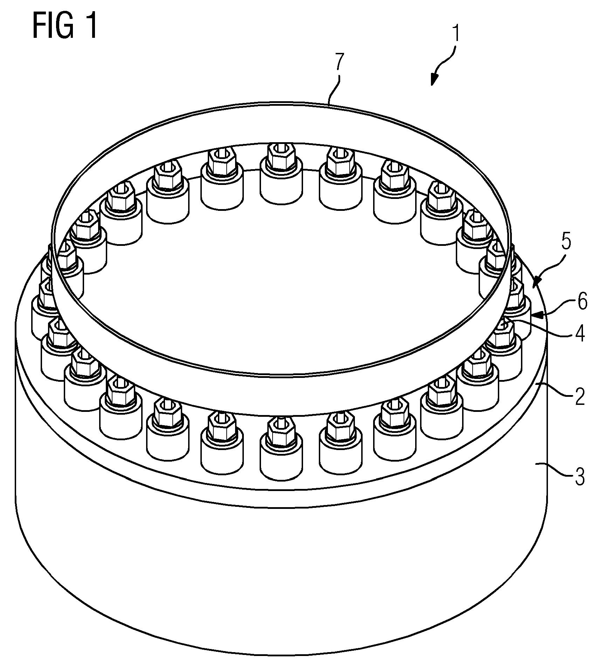

Abweichend von den in den Fig. 1 und 2 gezeigten Darstellungen kann jedem Verbindungselement 4 ein eigenes Kühlelement 7 zugeordnet sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kühlvorrichtung (1) zum Kühlen einer Verbindung zwischen zwei Bauteilen (2, 3),
mit einer Mehrzahl von Verbindungselementen (4) und einer Kühlbaugruppe (5),
wobei die Kühlbaugruppe (5) eine der Mehrzahl der Verbindungselemente (4) entsprechende Anzahl von Einsetzteilen (6) und ein Kühlelement (7) aufweist,
wobei das Kühlelement (7) mit den Einsetzteilen (6) wärmeleitend verbunden ist, und wobei die Kühlbaugruppe (5) wärmeleitend mit den Verbindungselementen (4) verbunden ist.

2. Kühlvorrichtung (1) nach Anspruch 1,
**dadurch gekennzeichnet, dass**
die Kühlvorrichtung (1) mehrere Bauteile aufweist, und dass die Bauteile aus unterschiedlichen Materialen gefertigt sind.

3. Kühlvorrichtung (1) nach Anspruch 2,
**dadurch gekennzeichnet, dass**
die Verbindungselemente (4) als Bauteile je einen Grundkörper (8) aus einem ersten Material mit einer ersten Wärmeleitfähigkeit aufweisen, wobei die Grundkörper (8) jeweils einen Hohlraum (11) aufweisen,
wobei in dem jeweiligen Hohlraum (11) als Bauteile je eines der Einsetzteile (6) aus einem zweiten, festen Material eingesetzt ist, wobei das jeweilige Einsetzteil (6) eine zweite Wärmeleitfähigkeit aufweist, die höher als die erste Wärmeleitfähigkeit des ersten Materials ist.

4. Kühlvorrichtung (1) nach Anspruch 3,
**dadurch gekennzeichnet, dass**
der jeweilige Hohlraum (11) eine Hohlraum-Haupterstreckungsrichtung und das jeweilige Einsetzteil (6) eine Einsetzteil-Haupterstreckungsrichtung aufweisen, wobei die Hohlraum-Haupterstreckungsrichtung und die Einsetzteil-Haupterstreckungsrichtung gleich ausgerichtet sind.

5. Kühlvorrichtung (1) nach Anspruch 3 oder 4,
**dadurch gekennzeichnet, dass**
das zweite Material Kupfer oder eine Kupfer enthaltende Legierung ist.

6. Kühlvorrichtung (1) nach Anspruch 3, 4 oder 5,
**dadurch gekennzeichnet, dass**
das erste Material Eisen oder eine Eisen enthaltende Legierung ist.

7. Kühlvorrichtung (1) nach einem der Ansprüche 3 bis 6,
**dadurch gekennzeichnet, dass**
das jeweilige Einsetzteil (6) mit dem jeweiligen Grundkörper (8) durch einen Formschluss verbunden ist.

8. Kühlvorrichtung (1) nach einem der Ansprüche 3 bis 7,
**dadurch gekennzeichnet, dass**
zwischen dem jeweiligen Einsetzteil (6) und dem jeweiligen Grundkörper (8) eine Wärmeleitpaste angeordnet ist.

9. Kühlvorrichtung (1) nach einem der Ansprüche 3 bis 8,
**dadurch gekennzeichnet, dass**
das jeweilige Einsetzteil (6) in den jeweiligen Grundkörper (8) eingepresst ist.

10. Kühlvorrichtung (1) nach einem der Ansprüche 1 bis 9,
**dadurch gekennzeichnet, dass**
das Kühlelement (7) zur Kühlung durch Konvektion ausgebildet ist.

11. Kühlvorrichtung (1) nach einem der Ansprüche 1 bis 10,
**dadurch gekennzeichnet, dass**
die jeweiligen Einsetzteile (6) und das Kühlelement (7) einstückig und/oder materialeinheitlich ausgebildet sind.

12. Kühlvorrichtung (1) nach einem der Ansprüche 1 bis 11,
**dadurch gekennzeichnet, dass**
das Kühlelement (7) eine im Wesentlichen ringförmige Grundform aufweist.

13. Kühlvorrichtung (1) nach einem der Ansprüche 1 bis 12,
**dadurch gekennzeichnet, dass**
das Kühlelement (7) eine im Wesentlichen zylindermantelflächenförmige Kühlfläche (14) aufweist.

14. Kühlbaugruppe (5) für eine Kühlvorrichtung (10) nach einem der Ansprüche 1 bis 13.

15. Verbindungselement (4) für eine Kühlvorrichtung (1) nach einem der Ansprüche 1 bis 13.
